# EUROPEAN PATENT SPECIFICATION

(11) **EP 1 906 047 B1**
(45) Date of publication and mention of the grant of the patent: **05.08.2009**
(21) Application number: 07019090.5
(22) Date of filing: 27.09.2007
(51) Int. Cl.: F16F 9/512

(54) **Damping force generating mechanism for shock absorber**
Mechanismus zum Erzeugen von Dämpfungskraft für einen Stoßdämpfer
Mécanisme de génération de force d'amortissement pour amortisseur

(30) Priority: 28.09.2006 JP 2006265157; 09.01.2007 JP 2007001126
(43) Date of publication of application: 02.04.2008
(73) Proprietor: KAYABA INDUSTRY CO., LTD., Minato-ku, Tokyo 105-6190 (JP)
(72) Inventor: Chikamatsu, Satoshi, Tokyo 105-6190 (JP); Watanabe, Kouichi, Tokyo 105-6190 (JP)
(74) Representative: Grünecker, Kinkeldey, Stockmair & Schwanhäusser Anwaltssozietät

(56) References cited:
- JP-A- 9 291 961
- US-A1- 2005 115 786

## Description

### FIELD OF THE INVENTION

This invention relates to a damping force generating mechanism provided in a shock absorber.

### BACKGROUND OF THE INVENTION

Document US 2005/0115786 A1 shows a damping force generating mechanism according to preamble of present claim 1.
A hydraulic shock absorber for a vehicle comprises, for example, two fluid chambers separated in the interior of a cylinder by a piston, and a passage provided through the piston to connect these fluid chambers. A damping valve in the form of a leaf valve is provided at an outlet of the passage to generate a damping force relative to the displacement of the piston. The leaf valve generally comprises a plurality of stacked leaves having a fixed inner circumferential part, and lifts an outer circumferential part to open the passage according to a differential pressure between the upstream and downstream sides of the leaves. With this construction, however, the damping force generated by the leaf valve tends to be excessive in a middle to high speed region of piston displacement.

In order to improve the damping force characteristic of a leaf valve for a damping valve, JPH09-291961A, published by the Japan Patent Office in 1997, proposes a leaf valve in which the inner circumferential part is not fixed but supported resiliently by a coil spring.

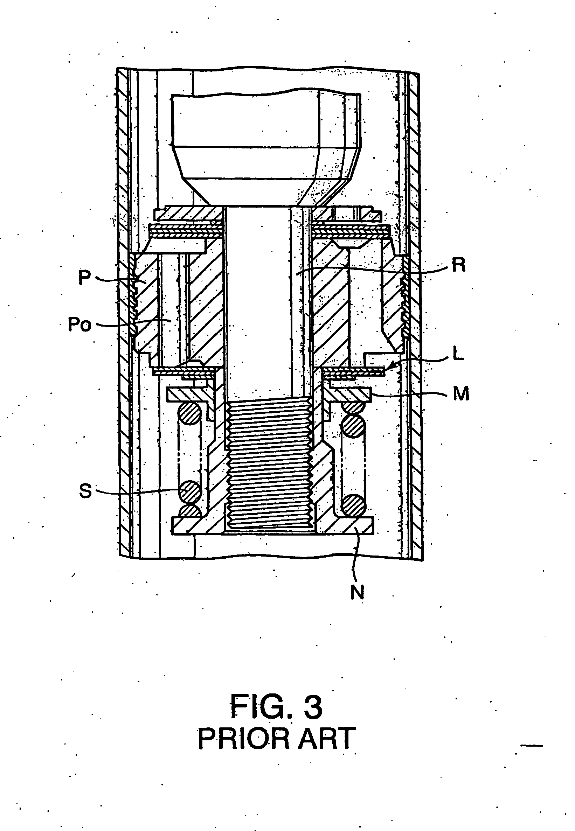

Referring to FIG. 3, in a shock absorber in which this leaf valve is installed, a cylindrical piston nut N is secured onto a tip of a piston rod R penetrating the piston P. A leaf valve L closing an outlet of a passage Po which passes through the piston P is fitted to the outer circumference of the piston nut N such that it can displace in an axial direction. A coil spring S, an end of which is supported by the piston nut N, resiliently supports the inner circumferential part of the leaf valve L via a push member M.

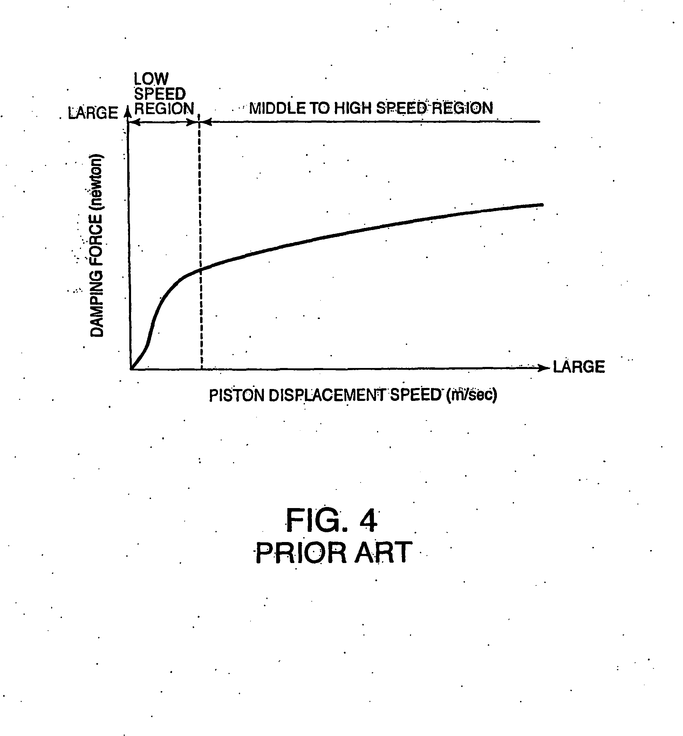

When the piston P moves upward in the figure, working oil in an oil chamber above the piston P flows into an oil chamber below the piston P via the passage Po and a damping force is generated due to the flow resistance of the leaf valve L at the outlet of the passage Po. When the piston displacement speed is in a low speed region, the outer circumferential part of the leaf valve L is bent downward in the figure from the inner circumferential part supported by the push member M. As the piston displacement speed reaches the middle to high speed region, the pressure in the passage Po becomes greater than the resilient force of a coil spring S such that the leaf valve L retreats from the piston P downward in an axial direction together with the push member M. As a result, the opening area of the leaf valve L becomes large so that the damping force is suppressed from becoming excessive. As shown in FIG. 4, the damping force increase is gradual with respect to an increase in the piston displacement speed, even in the middle to high speed region.

### SUMMARY OF THE INVENTION

This valve structure is effective in suppressing an excessive increase in the damping force generated in the middle to high speed region of piston displacement. Since the leaf valve L is kept in a retreated position once the piston displacement speed has reached the middle to high speed region of piston displacement, the damping force characteristic does not vary as long as the piston displacement speed varies in this region. When a spring load is set to obtain a preferable damping force in the middle speed region, therefore, the damping force generated in the high speed region may become insufficient.

It is therefore an object of this invention to provide a damping force generating mechanism which realizes different damping force characteristics in the middle speed region and the high speed region of piston displacement such that a preferable damping force is obtained in each of the speed regions.

In order to achieve the above object, this invention provides a damping force generating mechanism for a shock absorber according to the present claim 1.

The details as well as other features and advantages of this invention are set forth in the remainder of the specification and are shown in the accompanying drawings.

### BRIEF DESCRIPTION OF THE DRAWINGS

FIG. 1 is a longitudinal sectional view of essential parts of a shock absorber including a damping force generating mechanism according to this invention.

FIG. 2 is a diagram showing the characteristic of a damping force generated by the damping force generating mechanism.

FIG. 3 is a longitudinal sectional view of essential parts of a shock absorber including a damping force generating mechanism according to the prior art.

FIG. 4 is a diagram showing the characteristic of a damping force generated by the damping force generating mechanism according to the

### prior art.

### DESCRIPTION OF THE PREFERRED EMBODIMENTS

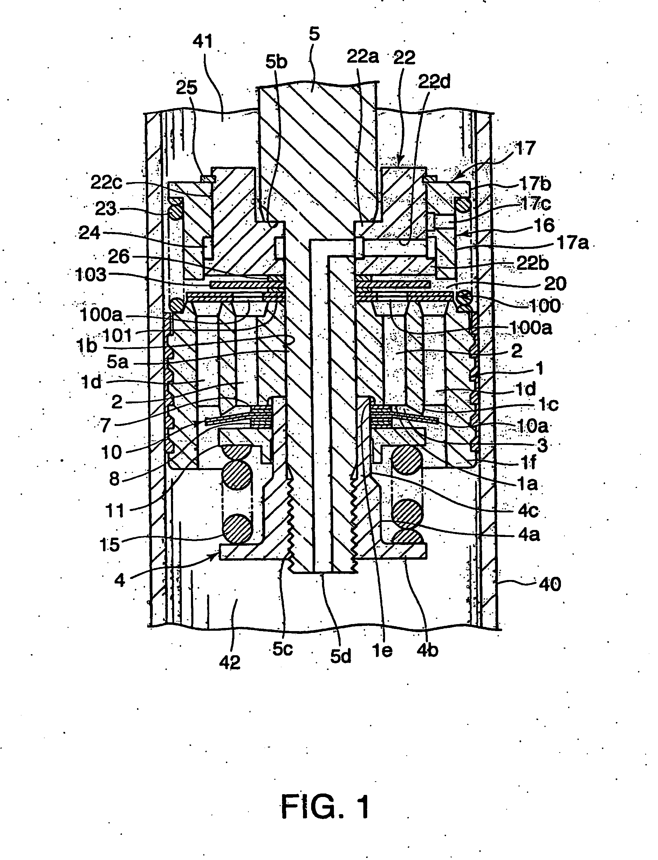

Referring to FIG. 1 of the drawings, a hydraulic shock absorber for a vehicle comprises a cylinder 40, a piston 1 enclosed in the cylinder 40 so as to be free to slide in an axial direction, and a piston rod 5 connected to the piston 1 and projecting axially from the cylinder 40.

The piston rod 5 has a small diameter part 5a formed at its lower end via a step 5b. The small diameter part 5a penetrates a through-hole 1b formed in the piston 1. A cylindrical part 4a of a piston nut 4 is screwed onto a male screw part formed at a lower end of the small diameter part 5a. The outer circumferential part 1f of the piston 1 slides on the inner circumference of the cylinder 40. The piston 1 is fixed to the small diameter part 5a.

The interior of the cylinder 40 is separated by the piston 1 into a first oil chamber 41 located above the piston 1 and a second oil chamber 42 located below the piston 1. Working oil is enclosed in the first oil chamber 41 and the second oil chamber 42. The first oil chamber 41 and the second oil chamber 42 communicate with each other via passages 2 and passages 1d formed respectively as through-holes in the piston 1.

Although not shown in the drawings, a reservoir or an air chamber is provided inside or outside the cylinder 40 as a known component of a hydraulic shock absorber to compensate for capacity variation in the cylinder 40 due to elongation and contraction of the piston rod 5 with respect to the cylinder 40.

A damping valve 10 is provided at openings 3 of the passages 2 in a lower end face 1a of the piston 1 facing the second oil chamber 42. Further, a damping valve 100 is provided at openings of the passages 1d formed in an upper end face of the piston 1 facing the first oil chamber 41. The piston 1 has a skirt portion at its lower end and a space surrounded by the skirt portion is used to accommodate the damping valve 10. Owing to this construction, the entire length of a piston part of the shock absorber from the upper end face of the piston 1 to the lower end of the piston nut 4 can be shortened while ensuring the length of the sliding surface of the piston 1.

The damping valve 10 generates a damping force during elongation of the shock absorber, in which the piston 1 displaces upward in the figure, by resisting the flow of working oil from the shrinking first oil chamber 41 to the expanding second oil chamber 42 through the passages 2. The damping valve 10 also functions as a check valve which prevents a reverse flow in the passages 2.

The damping valve 100 generates a damping force during contraction of the shock absorber, in which the piston 1 displaces downward in the figure, by resisting a flow of working oil from the shrinking second oil chamber 42 to the expanding first oil chamber 41 through the passages 1d. The damping valve 100 is constituted by a leaf valve and also functions as a check valve that prevents a reverse flow in the passages 1d. Holes 100a are formed so that the damping valve 100 does not prevent the working oil from flowing through the passages 2.

The damping valve 10 is constituted by a leaf valve that has a plurality of stacked leaves 10a covering the openings of the passages 2. More specifically, the damping valve 10 comprises a washer 7, the leaves 10a, a washer 8, a push member 11, and a coil spring 15. The washer 7, the plural leaves 10a, the washer 8, and the push member 11 are fitted on the outer circumference of a small diameter part 4c of the piston nut 4, which is formed continuously with the cylindrical part 4a and projects upward therefrom. The washer 7 is in contact with the lower end face 1a of the piston 1. The leaves 10a are gripped between the washers 7 and 8. The push member 11 applies a resilient force of the coil spring 15 to the washer 8 upward.

The coil spring 15 is interposed between the disk part 11a and a flange 4b which is formed at the bottom of the cylindrical part 4a of the piston nut 4.

A circular valve seat 1c projecting downward is formed on the lower end face 1a of the piston 1 to surround the openings of the passages 2 and face the outer circumference of the leaves 10a. The damping valve 10 closes the openings 3 of the passages 2 by causing the leaves 10a to be seated on the valve seat 1c. Further, although not shown in the figure, the leaves 10a have a minute notch or minute notches on the outer circumference to connect the passages 2 and the second oil chamber 42 even when the openings 3 are closed by the leaves 10a. It is also possible to form a minute orifice or minute orifices on the valve seat 1c by stamping instead of providing a notch or notches on the leaves 10a. Providing such a passage or passages having a minute flow sectional area in the damping valve is known in the art.

The number of the leaves 10a depends on the required damping force characteristic, or in other words the required relationship between the piston displacement speed and the generated damping force. A single leaf may be used depending on the required damping force characteristic. Further, it is possible to stack plural leaves 10a having different diameters depending on the required damping force characteristic.

According to the construction of the damping valve 10 described above, the inner circumferential part of the leaves 10a is pressed against the lower end face 1a of the piston 1 by the push member 11 that applies the resilient force of the coil spring 15. Herein, the thickness of the washer 7 is set to be smaller than the distance from the lower end face 1a of the piston 1 to the crest of the valve seat 1c in the axial direction, thereby providing an initial bend to the leaves 10a.

By regulating the amount of the initial bend, the opening pressure with which the leaves 10a are lifted off the valve seat 1c to open the passages 2 can be regulated. The amount of the initial bend can be regulated by altering the thickness of the washer 7 or stacking a plurality of the washers 7. The amount of the initial bend should therefore be set such that the best damping force characteristic is obtained for the vehicle that uses the shock absorber. The washer(s) 7 may be omitted depending on the distance in the axial direction from the lower end face 1a to the crest of the valve seat 1c.

A disc spring, a leaf spring, or a resilient material such as rubber may be used to apply resilient force on the leaves 10a instead of the coil spring 15.

Next, a pressure-responsive throttle 16 with which the hydraulic shock absorber is provided will be described.

The pressure-responsive throttle 16 comprises a pressure chamber partitioning member 22, a spacer 26, a valve stopper 103, and a washer 101, which are disposed above the piston 1. These members are fitted on the outer circumference of the small diameter part 5a of the piston rod 5 in this order from below such that the pressure chamber partitioning member 22 is in contact with the step 5b and gripped between the step 5b and the piston nut 4 together with the piston 1. The piston 1 has a recess le on the lower end face 1a to accommodate the tip of the small diameter part 4c of the piston nut 4.

The valve stopper 103 faces the damping valve 100 and keeps a distance corresponding to the thickness of the washer 101 from the damping valve 100 so as to prevent deformation of the damping valve 100 beyond the valve stopper 103.

The pressure chamber partitioning member 22 is a cylindrical member having a bottom 22a which the small diameter part 5a of the piston rod 5 penetrates. A projection 22b projecting in a radial direction is formed at the lower end of the outer circumference of the bottom 22a.

The pressure-responsive throttle 16 further comprises a spool 17 and a coil spring 23. The spool 17 is formed into a cylindrical shape and fitted onto the outer circumference 22c of the cylindrical pressure chamber partitioning member 22 so as to be free to slide in the axial direction. A flange 17b is formed in the upper end of the spool 17. A gap is provided between the flange 17b and the inner circumferential surface of the cylinder 40 such that working oil can flow through this gap. The coil spring 23 is interposed between the flange 17b and an outer circumferential part of the upper end of the piston 1.

The inner circumference of a lower end 17a of the spool 17 is set to have a greater diameter than the outer circumference of the pressure chamber partitioning member 22 such that the projection 22b of the pressure chamber partitioning member 22 slides on the inner circumference of the lower end 17a of the spool 17. According to this setting, an annular pressure chamber 24 is formed between the inner circumference of the lower end 17a of the spool 17 and the outer circumference of the pressure chamber partitioning member 22. A passage 5d is formed through the small diameter part 5a of the piston rod 5 as a pilot passage that introduces the pressure in the second oil chamber 42 into the pressure chamber 24. A passage 22d connecting the passage 5d to the pressure chamber 24 is formed in the pressure chamber partitioning member 22.

The coil spring 23 applies a resilient force on the spool 17 in a direction that causes the spool 17 to retreat from the piston 1, or in other words a direction for supplementing the action of the pressure in the pressure chamber 24. Displacement of the spool 17 in this direction is limited by a stop ring 25 fitted onto the outer circumference of the pressure chamber partitioning member 22. This position of the spool 17 is expressed as a retreated position.

The pressure in the first oil chamber 41 pushes the spool 17 downward due to a difference in the upward and downward-facing pressure receiving areas of the spool 17. On the other hand, the pressure in the pressure chamber 24 and the resilient force of the coil spring 23 act upward on the spool 17. The spool 17 displaces downward along the pressure chamber partitioning member 22 as the pressure in the first oil chamber 41 increases with respect to the pressure in the second oil chamber 42, thereby causing the lower end 17a to approach the outer circumference of the damping valve 100 and finally come into contact therewith.

The flow of working oil between the first oil chamber 41 and the passages 2 is formed exclusively via a gap 20 between the lower end 17a of the spool 17 and the outer circumference of the damping valve 100. As the spool 17 approaches the damping valve 100, therefore, the gap 20 narrows and the flow resistance to the working oil passing through the gap 20 increases. In other words, the gap 20 dominates the flow resistance of working oil passing through the passage 2.

A bypass port 17c connecting the interior and exterior of the spool 17 is formed in the spool 17. The bypass port 17c functions as a bypass valve connecting the passage 22d and the first oil chamber 41 when the spool 17 displaces from the retreated position defined by the stop ring 25 to a predetermined position in which the lower end 17a is almost closes the gap 20.

The damping valve 10 and the pressure-responsive throttle 16 function as described below.

When the piston 1 displaces upward in the cylinder 40, or in other words when the shock absorber elongates, the first oil chamber 41 shrinks and the second oil chamber 42 expands. According to this action, the working oil in the first oil chamber 41 flows into the second oil chamber 42 via the gap 20, the passages 2, and the damping valve 10.

When the piston displacement speed is very low, the opening pressure acting on the damping valve 10 is too low to cause the leaves 10a, which are under the initial bend, to open the passages 2. The working oil in the passages 2 flows into the second oil chamber 42 via the notch(es) formed in the leaves 10a or the orifice(s) formed in the valve seat 1c as described above. Since the flow rate of working oil flowing into the second oil chamber 42 is very small in this state, the damping force generated by the damping valve 10 is also very small.

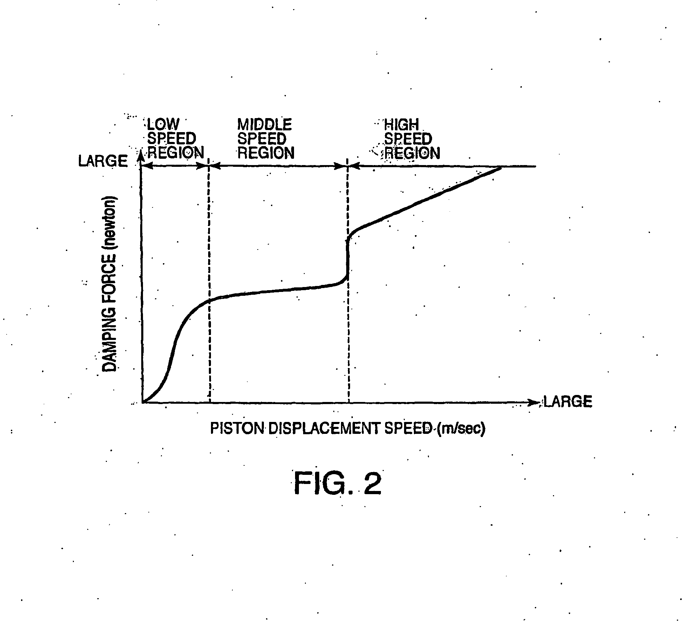

As the piston displacement speed increases, the leaves 10a bend downward from the outer rim of the washer 8 and the flow cross-sectional area of the working oil flowing out from the passages 2 into the second oil chamber 42 increases. The damping force generated by the damping valve 10 in this state depends on the elastic deformation of the leaves 10a, and increases sharply with respect to an increase in the piston displacement speed, as shown in the low speed region in FIG. 2.

When the piston displacement speed reaches the middle speed region, the differential pressure between the first oil chamber 41 and the second oil chamber 42 increases further, and the leaves 10a move downward in FIG. 1 against the resilient force of the coil spring 15. As the leaves 10a move downward, the flow cross-sectional area of the opening 3 of the passages 2 increases greatly. In this state, since the damping valve 10 is fully open, the increase in the damping force relative to the increase in the piston displacement speed is much gentler than in the low speed region, as shown in FIG. 2.

When the piston displacement speed reaches the high speed region, the differential pressure between the first oil chamber 41 and the second oil chamber 42 increases further and the pressure-responsive throttle 16 displaces the spool 17 downward in FIG. 1 from the retreated position against the resilient force of the coil spring 23. As a result, the gap 20 between the lower end 17a and the outer circumference of the damping valve 100 narrows, leading to a notable increase in the flow resistance of the working oil moving from the first oil chamber 41 to the second oil chamber 42.

Accordingly, the damping force increases sharply as soon as the piston displacement speed reaches the high speed region, as shown in FIG. 2. On the other hand, the bypass port 17c of the spool 17 connects the passage 22d and the first oil chamber 41 immediately before the gap 20 is closed. As a result, a bypass passage bypassing the damping vale 10 is formed by the bypass port 17c, the passage 22d, and the passage 5d. The working oil in the first oil chamber 41 flows out to the second oil chamber 42 via this bypass passage bypassing the damping valve 10 one the gap 20 is closed. The damping force generated in this state depends on the cross-sectional area of the bypass port 17c. By properly setting the cross-sectional area of the bypass port 17c, therefore, the generated damping force in the high speed region increases at a rate almost equal to that in the middle speed region with respect to an increase in the piston displacement speed.

The spring load of the coil spring 25 is set in advance such that the difference between the oil pressure in the first oil chamber 41 and the oil pressure in the second oil chamber 42 introduced into the pressure chamber 26 becomes greater than the resilient force of the coil spring 25 when the piston displacement speed reaches the high speed region. By setting the spring load of the coil spring 25 in this way, the pressure sensitive throttle 16 does not operate as long as the piston displacement speed stays in the middle speed region or below, and the damping force accompanying the flow of working oil from the first oil chamber 41 to the second oil chamber 42 in these regions is generated exclusively by the damping valve 10.

According to this damping force generating mechanism, therefore, different damping force characteristics are obtained in the low speed region, the middle speed region, and the high speed region

When the piston 1 displaces downward in FIG. 1 in the cylinder 40, or in other words when the shock absorber contracts, the second oil chamber 42 shrinks and the first oil chamber 41 expands. According to this action, the working oil in the second oil chamber 42 flows into the first oil chamber 41 via the passages 1d, and the damping valve 100 generates a damping force.

As described above, according to this damping force generating mechanism, when the piston displacement speed stays within the middle speed region, the increase rate of the damping force is suppressed to be small, whereas when the piston displacement speed reaches the high speed region, the damping force as well as its increase rate increase notably in comparison to the middle speed region. Accordingly, a sufficient damping force is generated in the high speed region of piston displacement to fully damp the vibration of the vehicle such that a favorable degree of vehicle riding comfort is obtained.

Further, when the amplitude of oscillation is great as is the case when the shock absorber reaches the most elongated position and the piston displacement speed reaches the high speed region, the damping force increases sharply such that the piston displacement speed falls promptly. A shock accompanying full elongation of the shock absorber can thereby be mitigated.

The contents of Tokugan 2006-265157 with a filing date of September 28, 2006 in Japan, and Tokugan 2007-001126 with a filing date of January 9, 2007 are hereby incorporated by reference.

Although the invention has been described above with reference to certain embodiments of the invention, the invention is not limited to the embodiments described above. Modifications and variations of the embodiments described above will occur to those skilled in the art, within the scope of the claims.

For example, in the embodiment described above, the pressure-responsive throttle 16 is designed to close the gap 20, but such a construction is also possible by setting the cross-sectional area of the bypass port 17c such that the pressure-responsive throttle 16 does not close the gap 20 completely and allows some of the working oil to flow through the gap 20 even when the spool 17 is in the lowest position.

In the embodiment described above, the leaves 10a of the damping valve 10 are arranged to displace in the axial direction, but this invention does not depend on the structure of the damping valve. Even when this invention is applied to a shock absorber provided with a damping valve in which the inner circumference of the leaves is fixed such that the damping force is generated depending only on elastic deformation of the leaves, the combination of the pressure-responsive throttle and the bypass passage according to this invention can vary the damping force characteristic in the high speed region of piston displacement independently of the damping force characteristics in the other speed regions.

The damping force generating mechanism according to this invention may also be applied to the generation of damping force during contraction of a shock absorber. The pressure-responsive throttle may be fitted to a base valve, rather than the piston of the embodiments described above. In short, this invention can be applied to any damping force generating mechanism that generates a damping force accompanying the flow of a fluid between two fluid chambers in a shock absorber.

## Claims

1. A damping force generating mechanism for a shock absorber, the shock absorber comprising a first fluid chamber (41), a second fluid chamber (42), and a passage (2) connecting the first and second fluid chambers (41, 42), the mechanism comprising:
a damping valve (10) that resists a fluid flow through the passage (2, 20) from the first fluid chamber (41) to the second fluid chamber(42); and
a spool (17) which is disposed in the passage (2, 20) and displaces to reduce a flow cross-sectional area of the passage (2, 20) when a fluid pressure in the first fluid chamber (41) increases beyond a fluid pressure in the second fluid chamber (42) by more than a predetermined pressure;
**characterized in that**
the spool (17) has a bypass port (17c) which connects the first fluid chamber (41) and the second fluid chamber (42) by bypassing the damping valve (10) and a part of the passage (2, 20) of which the flow cross-sectional area is reduced by the spool (17), when the spool (17) displaces to a predetermined operation position.

2. The damping force generating mechanism as defined in Claim 1, **characterized in that** the damping valve (10) comprises a leaf valve which is provided in an opening (3) of the passage (2) onto the second fluid chamber (42) and configured to deform elastically to increase a cross-sectional area of the fluid flow in the passage (2, 20) as a differential pressure between the first fluid chamber (41) and the second fluid chamber (42) increases.

3. The damping force generating mechanism as defined in Claim 2, **characterized in that** the leaf valve is further configured to displace in a direction to be detached from the opening (3) to further increase the cross-sectional area of the fluid flow in the passage (2, 20) when the differential pressure between the first fluid chamber (41) and the second fluid chamber (42) increases beyond a predetermined value.

4. The damping force generating mechanism as defined in Claim 3, **characterized in that** the shock absorber comprises a cylinder (40) and a piston (1) which is housed in the cylinder (40) so as to be free to slide in the cylinder (40) and separates the first fluid chamber (41) from the second fluid chamber (42) in the cylinder (40), and with respect to a displacement speed of the piston (1) in a direction to shrink the first fluid chamber (41) while expanding the second fluid chamber (42), the leaf valve is configured to deform elastically in a first speed region and displace in the direction to be detached from the opening (3) in a second speed region which is greater than the first speed region, and the spool (17) is configured to reduce the flow cross-sectional area of the passage (2, 20) in a third speed region which is greater than the second speed region.

5. The damping force generating mechanism as defined in any one of Claim 1 through Claim 4, **characterized in that** the spool (17) is disposed between the passage (2) and the first fluid chamber (41).

6. The damping force generating mechanism as defined in Claim 5, **characterized in that** the spool (17) has a receiving area for receiving the fluid pressure in the first fluid chamber (41) and a receiving area for receiving the fluid pressure in the second fluid chamber (42), and is configured to dose the passage (2, 20) by displacing in an axial direction of the cylinder (40) depending on the pressures acting on the pressure receiving areas;
a pressure chamber (24) facing the receiving area of the fluid pressure in the second fluid chamber (42), the fluid pressure in the second fluid chamber (42) being introduced into the pressure chamber (24); and
a spring (23) which biases the spool (17) in a direction to open the passage (2, 20).

7. The damping force generating mechanism as defined in Claim 6, **characterized in that** the shock absorber comprises a cylinder (40), a piston (1) which is housed in the cylinder (40) so as to be free to slide in the cylinder (40) and separates the first fluid chamber (41) from the second fluid chamber (42) in the cylinder (40), and a piston rod (5) which is connected to the piston (1) and penetrates the first fluid chamber (41),and the passage (2, 20) is formed through the piston (1), and the spool (17) is fitted onto the outer circumference of a pressure chamber partitioning member (22) fixed to the piston rod (5).

8. The damping force generating mechanism as defined in Claim 7, **characterized by** a pilot passage (5d, 22d) which introduces the fluid pressure in the second fluid chamber (42) into the pressure chamber (24).

9. The damping force generating mechanism as defined in Claim 8, **characterized in that** the pilot passage (5d, 22d) penetrates the pressure chamber partitioning member (22), and the bypass port (17c) comprises a through-hole formed in the spool (17), one end of which opens onto the first fluid chamber (41) and another end of which faces the outer circumference of the pressure chamber partitioning member (22).

10. The damping force generating mechanism as defined in any one of Claim 7 through Claim 9, **characterized by** a second passage (1d) formed through the piston (1) to allow the working fluid to flow from the second fluid chamber (42) to the first fluid chamber (41) and a second damping valve (100) which exerts a predetermined resistance on the working oil flowing through the second passage (1d).

## Patentansprüche

1. Dämpfkraft-Erzeugungsmechanismus für einen Stoßdämpfer, wobei der Stoßdämpfer eine erste Fluidkammer (41), eine zweite Fluidkammer (42) sowie einen Durchlass (2) umfasst, der die erste und die zweite Fluidkammer (41, 42) verbindet, und der Mechanismus umfasst:
ein Dämpfventil (10), das einem Fluidstrom durch den Durchlass (2, 20) aus der ersten Fluidkammer (41) in die zweite Fluidkammer (42) Widerstand entgegensetzt; und
einen Steuerkolben (17), der in dem Durchlass (2, 20) angeordnet ist und verschoben wird, um eine Strömungs-Querschnittsfläche des Durchlasses (2, 20) zu reduzieren, wenn ein Fluiddruck in der ersten Fluidkammer (41) um mehr als einen vorgegebenen Druck über einen Fluiddruck in der zweiten Fluidkammer (42) hinaus ansteigt;
**dadurch gekennzeichnet, dass**
der Steuerkolben (17) einen Umgehungskanal (17c) aufweist, der die erste Fluidkammer (41) und die zweite Fluidkammer (42) verbindet, indem er das Dämpfventil (10) und einen Teil des Durchlasses (2, 20) umgeht, dessen Strömungs-Querschnittsfläche durch den Steuerkolben (17) reduziert wird, wenn der Steuerkolben (17) an eine vorgegebene Arbeitsposition verschoben wird.

2. Dämpfkraft-Erzeugungsmechanismus nach Anspruch 1, **dadurch gekennzeichnet, dass** das Dämpfventil (10) ein Klappenventil umfasst, das in einer Öffnung (3) des Durchlasses (2) zu der zweiten Fluidkammer (42) hin vorhanden ist und so ausgeführt ist, dass es sich elastisch verformt, um eine Querschnittsfläche des Fluidstroms in dem Durchlass (2, 20) zu vergrößern, wenn eine Druckdifferenz zwischen der ersten Fluidkammer (41) und der zweiten Fluidkammer (42) zunimmt.

3. Dämpfkraft-Erzeugungsmechanismus nach Anspruch 2, **dadurch gekennzeichnet, dass** das Klappenventil des Weiteren so ausgeführt ist, dass es in einer Richtung verschoben wird, in der es von der Öffnung (3) getrennt wird, um die Querschnittsfläche des Fluidstroms in dem Durchlass (2, 20) weiter zu vergrößern, wenn die Druckdifferenz zwischen der ersten Fluidkammer (41) und der zweiten Fluidkammer (42) über einen vorgegebenen Wert hinaus zunimmt.

4. Dämpfkraft-Erzeugungsmechanismus nach Anspruch 3, **dadurch gekennzeichnet, dass** der Stoßdämpfer einen Zylinder (40) und einen Kolben (1) umfasst, der in dem Zylinder (40) so aufgenommen ist, dass er frei in dem Zylinder (40) gleitet und die erste Fluidkammer (41) von der zweiten Fluidkammer (42) in dem Zylinder (40) trennt, und das Klappenventil in Bezug auf eine Verschiebungsgeschwindigkeit des Kolbens (1) in einer Richtung, in der die erste Fluidkammer (41) verkleinert wird und gleichzeitig die zweite Fluidkammer (42) vergrößert wird, so ausgeführt ist, dass es sich in einer ersten Geschwindigkeitszone elastisch verformt und in einer zweiten Geschwindigkeitszone, die größer ist als die erste Geschwindigkeitszone, in der Richtung verschoben wird, in der es von der Öffnung (3) getrennt wird, und der Steuerkolben (17) so ausgeführt ist, dass er die Strömungs-Querschnittsfläche des Durchlasses (2, 20) in einer dritten Geschwindigkeitszone verkleinert, die größer ist als die zweite Geschwindigkeitszone.

5. Dämpfkraft-Erzeugungsmechanismus nach einem der Ansprüche 1 bis 4, **dadurch gekennzeichnet, dass** der Steuerkolben (17) zwischen dem Durchlass (2) und der ersten Fluidkammer (41) angeordnet ist.

6. Dämpfkraft-Erzeugungsmechanismus nach Anspruch 5, **dadurch gekennzeichnet, dass** der Steuerkolben (17) einen Aufnahmebereich zum Aufnehmen des Fluiddrucks in der ersten Fluidkammer (41) und einen Aufnahmebereich zum Aufnehmen des Fluiddrucks in der zweiten Fluidkammer (42) hat und so ausgeführt ist, dass er den Durchlass (2, 20) durch Verschieben in einer axialen Richtung des Zylinders (40) in Abhängigkeit von den Drücken, die auf die Druckaufnahmebereiche wirken, schließt; eine Druckkammer (24), die dem Aufnahmebereich des Fluiddrucks in der zweiten Fluidkammer (42) zugewandt ist, wobei der Fluiddruck in der zweiten Fluidkammer (42) in die Druckkammer (24) eingeleitet wird; und
eine Feder (23), die den Steuerkolben (17) in einer Richtung spannt, in der der Durchlass (2, 20) geöffnet wird.

7. Dämpfkraft-Erzeugungsmechanismus nach Anspruch 6, **dadurch gekennzeichnet, dass** der Stoßdämpfer einen Zylinder (40), einen Kolben (1), der in dem Zylinder (40) so aufgenommen ist, dass er frei in dem Zylinder (40) gleitet und die erste Fluidkammer (41) von der zweiten Fluidkammer (42) in dem Zylinder (40) trennt, sowie eine Kolbenstange (5) umfasst, die mit dem Kolben (1) verbunden ist und in die erste Fluidkammer (41) eindringt, und der Durchlass (2, 20) durch den Kolben (1) hindurch ausgebildet ist und der Steuerkolben (17) auf den Außenumfang eines Druckkammer-Unterteilungselementes (22) aufgepasst ist, das an der Kolbenstange (5) befestigt ist.

8. Dämpfkraft-Erzeugungsmechanismus nach Anspruch 7, **gekennzeichnet durch** einen Steuerdurchlass (5d, 22d), der den Fluiddruck in der zweiten Fluidkammer (42) in die Druckkammer (24) einleitet.

9. Dämpfkraft-Erzeugungsmechanismus nach Anspruch 8, **dadurch gekennzeichnet, dass** der Steuerdurchlass (5d, 22d) in das Druckkammer-Unterteilungselement (22) eindringt und der Umgehungskanal (17c) ein Durchgangsloch umfasst, das in dem Steuerkolben (17) ausgebildet ist, wobei sich ein Ende desselben zu der ersten Fluidkammer (41) hin öffnet und das andere Ende desselben dem Außenumfang des Druckkammer-Unterteilungselementes (22) zugewandt ist.

10. Dämpfkraft-Erzeugungsmechanismus nach einem der Ansprüche 7 bis 9, **gekennzeichnet durch** einen zweiten Durchlass (1d), der **durch** den Kolben (1) hindurch ausgebildet ist, so dass das Arbeitsfluid aus der zweiten Fluidkammer (42) in die erste Fluidkammer (41) strömen kann, sowie **durch** ein zweites Dämpfventil (100), das einen vorgegebenen Widerstand auf das Arbeitsöl ausübt, das **durch** den zweiten Durchlass (1d) hindurchströmt.

## Revendications

1. Mécanisme de génération de force d'amortissement pour un amortisseur, l'amortisseur comprenant une première chambre de fluide (41), une deuxième chambre de fluide (42) et un passage (2) reliant les première et deuxième chambres de fluide (41, 42), le mécanisme comprenant :
un clapet d'amortissement (10) qui s'oppose à un écoulement de fluide à travers le passage (2, 20) de la première chambre de fluide (41) vers la deuxième chambre de fluide (42) ; et
un tiroir (17) qui est disposé dans le passage (2, 20) et qui se déplace pour réduire une section transversale d'écoulement du passage (2, 20) lorsqu'une pression de fluide dans la première chambre de fluide (41) augmente au-delà d'une pression de fluide dans la deuxième chambre de fluide (42) de plus d'une pression prédéterminée ;
**caractérisé en ce que**
le tiroir (17) comporte un orifice de dérivation (17c) qui relie la première chambre de fluide (41) et la deuxième chambre de fluide (42) en contournant le clapet d'amortissement (10) et une partie du passage (2, 20) dont la section d'écoulement est réduite par le tiroir (17), lorsque le tiroir (17) se déplace vers une position d'actionnement prédéterminée.

2. Mécanisme de génération de force d'amortissement selon la revendication 1, **caractérisé en ce que** le clapet d'amortissement (10) comprend une soupape à lamelle qui est prévue dans une ouverture (3) du passage (2) sur la deuxième chambre de fluide (42) et configurée pour se déformer de manière élastique pour augmenter une section de l'écoulement de fluide dans le passage (2, 20) alors que la pression différentielle entre la première chambre de fluide (41) et la deuxième chambre de fluide (42) augmente.

3. Mécanisme de génération de force d'amortissement selon la revendication 2, **caractérisé en ce que** la soupape à lamelle est en outre configurée pour se déplacer dans une direction de séparation de l'ouverture (3) pour augmenter davantage la section transversale de l'écoulement de fluide dans le passage (2, 20) lorsque la pression différentielle entre la première chambre de fluide (41) et la deuxième chambre de fluide (42) augmente au-delà d'une valeur prédéterminée.

4. Mécanisme de génération de force d'amortissement selon la revendication 3, **caractérisé en ce que** l'amortisseur comprend un cylindre (40) et un piston (1) qui est logé dans le cylindre (40) de manière à pouvoir coulisser librement dans le cylindre (40) et qui sépare la première chambre de fluide (41) de la deuxième chambre de fluide (42) dans le cylindre (40), et en ce qui concerne une vitesse de déplacement du piston (1) dans une direction pour réduire la première chambre de fluide (41) tout en étendant la deuxième chambre de fluide (42), la soupape à lamelle est configurée pour se déformer de manière élastique dans une première région de vitesse et pour se déplacer dans la direction de séparation de l'ouverture (3) dans une deuxième région de vitesse qui est supérieure à la première région de vitesse, et le tiroir (17) est configuré pour réduire la section d'écoulement du passage (2, 20) dans une troisième région de vitesse qui est supérieure à la deuxième région de vitesse.

5. Mécanisme de génération de force d'amortissement selon l'une quelconque des revendications 1 à 4, **caractérisé en ce que** le tiroir (17) est disposé entre le passage (2) et la première chambre de fluide (41).

6. Mécanisme de génération de force d'amortissement selon la revendication 5, **caractérisé en ce que** le tiroir (17) comporte une zone de réception pour recevoir la pression de fluide dans la première chambre de fluide (41) et une zone de réception pour recevoir la pression de fluide dans la deuxième chambre de fluide (42), et est configuré pour calibrer le passage (2, 20) en se déplaçant dans une direction axiale du cylindre (40) en fonction des pressions agissant sur les zones de réception de pression ;
une chambre de pression (24) faisant face à la zone de réception de la pression de fluide dans la deuxième chambre de fluide (42), la pression de fluide dans la deuxième chambre de fluide (42) étant introduite dans la chambre de pression (24) ; et
un ressort (23) qui sollicite le tiroir (17) dans une direction pour ouvrir le passage (2, 20).

7. Mécanisme de génération de force d'amortissement selon la revendication 6, **caractérisé en ce que** l'amortisseur comprend un cylindre (40), un piston (1) qui est logé dans le cylindre (40) de manière à pouvoir coulisser librement dans le cylindre (40) et qui sépare la première chambre de fluide (41) de la deuxième chambre de fluide (42) dans le cylindre (40), et une tige de piston (5) qui est reliée au piston (1) et qui pénètre dans la première chambre de fluide (41), et le passage (2, 20) est formé à travers le piston (1), et le tiroir (17) est assemblé sur la circonférence extérieure d'un élément de division de chambre de pression (22) fixé à la tige de piston (5).

8. Mécanisme de génération de force d'amortissement selon la revendication 7, **caractérisé par** un passage pilote (5d, 22d) qui introduit la pression de fluide de la deuxième chambre de fluide (42) dans la chambre de pression (24).

9. Mécanisme de génération de force d'amortissement selon la revendication 8, **caractérisé en ce que** le passage pilote (5d, 22d) pénètre dans l'élément de division de chambre de pression (22), et l'orifice de dérivation (17c) comprend un trou traversant formé dans le tiroir (17), dont une extrémité s'ouvre dans la première chambre de fluide (41) et dont une autre extrémité fait face à la circonférence extérieure de l'élément de division de chambre de pression (22).

10. Mécanisme de génération de force d'amortissement selon l'une quelconque des revendications 7 à 9, **caractérisé par** un deuxième passage (1d) formé à travers le piston (1) pour permettre au fluide de travail de s'écouler de la deuxième chambre de fluide (42) vers la première chambre de fluide (41) et un deuxième clapet d'amortissement (100) qui exerce une résistance prédéterminée sur l'huile de travail s'écoulant à travers le deuxième passage (1d).
